# EUROPEAN PATENT APPLICATION

(11) **EP 1 132 006 A1**
(43) Date of publication of application: **12.09.2001**
(21) Application number: 01610017.4
(22) Date of filing: 05.03.2001
(51) Int. Cl.: A22C 25/14

(54) **Method and apparatus for opening fish and removing the intestines of the fish and use of the apparatus for carrying out the method**

(30) Priority: 07.03.2000 DK 200000364
(71) Applicant: Goliath Maskinfabrik ApS, 9300 Saeby (DK)
(72) Inventor: Nielsen, John Norbak, 9300 Saeby (DK)
(74) Representative: Larsen, Hans Ole

(57) **Abstract**

The invention concerns a method and apparatus for opening fish (2) and removing the intestines from the fish, said fish being transported individually via a conveyor (3) to an aggregate (4) where opening of the fish (2) and removal of the intestines from the fish is carried out, and where the length of the fish is determined by the use of first means (5) for the generation of first data, and where the mutual position of the aggregate (4) and the fish (2) is adjusted as a function of the determined length of the fish. The conveyor (3) is moved stepwise in a discontinuous movement, and the opening of the fish (2) and removal of the intestines from the fish takes place in the period between two successive steps, and the removal of the intestines is effected by a suction in the opening made in the fish and in the same step as that in which the opening is established.

## Description

The invention concerns a method for opening fish and removing the intestines from the fish, said fish being transported individually via a conveyor to an aggregate where the opening of the fish and removal of the intestines from the fish is carried out, and where the length of the fish is determined by the use of first means for the generation of first data, and where the mutual position of the aggregate and the fish is adjusted as a function of the determined length of the fish.

Moreover, the invention concerns an apparatus for opening fish and removing the intestines from the fish, comprising a conveyor and an aggregate for opening fish and removing the intestines, where said conveyor transports the fish to and under the aggregate, and where the apparatus comprises first means for the registration of the length of the fish.

Finally, the invention comprises the use of such a method and apparatus.

From German patent publication no. 3343789, there is known an apparatus for the opening of fish and the sucking of the intestines out of the fish, especially from trout. The way in which the apparatus functions is that the fish are placed on a vertically-extending conveyor, whereby they are brought forward to a suction station which comprises means whereby the suction station can be moved continuously and simultaneously with the conveyor. When the fish shall thus have the intestines removed upon arrival at the suction station, a knife effects the cutting-up of the fish, said knife moving at the same speed as the conveyor itself. Thereafter, a coupling to a suction station is effected so that the intestines can be removed, and where said suction station also moves at the same speed as the conveyor.

The apparatus thus requires great accuracy between the two units in order to avoid unintentional damage to the fish during the cutting-up and the sucking out of the intestines, Moreover, it is also required that the suction station returns to its starting point in order to receive the next fish, and for this reason the fish can not be laid up on the conveyor in a random movement, but thus so that there must be a certain interval in order for the suction and cutting aggregate to be able to reach into position.

From WO 95/03704 there is known a method and an apparatus of the kind disclosed in the introduction. According to this publication, the fish are placed on a conveyor, after which they are fed to different cutting stations for the cutting of the fish, including a cutting station where the head is cut off and the intestines are cut out in one and the same station. Such a processing will give rise to a very great waste of fish, in that the cutting away will comprise not only the intestine area and the head, but also areas adjoining the intestines, the stomach, including the fish tissue which surrounds the intestines on both the upper and the lower side. Furthermore, if a distinct removal of the adjoining areas is not effected, there is a risk that the intestine area is not adequately removed, after which the process will thus be inadequate. Moreover, the fish waste which arises with such a cutting of the fish will either pile up on the conveyor or fall down at the side. Consequently, the disposal of the fish waste does not constitute an integral part of the actual cutting aggregate.

The object of the present invention is thus to provide a method and an apparatus which is not encumbered with the above-mentioned disadvantages, and where there is provided a fully-automatic machine and a method for cleaning and sorting of the fish which can be used out on the fishing boat itself, so that the fish are processed immediately while alive, and have their intestines removed, in that these are collected in the vacuum container or a waste container associated herewith, and where the fish are also sorted into the correct categories.

The apparatus and the method according to the invention are particularly suitable for use in connection with flat fish, in that the intestines of flat fish are situated substantially in the same side and proportionally at the same distance in relation to the tip of the snout.

This object is achieved with a method of the kind disclosed in the introduction, and also where
the conveyor is moved stepwise by a discontinuous movement,
the opening of the fish and the removal of the intestines takes place in the period between two successive steps,
the intestine removal is effected by a suction in the opening made in the fish and in the same step as that in which the opening is established.

The above-mentioned advantages are also achieved with an apparatus of the kind disclosed in the introduction, and also where
the aggregate comprises a vertical, movable unit with an inlet opening and an outlet opening through which the intestines of the fish are discharged, and in which a knife is placed in association with the inlet opening, said outlet opening of the vertical unit being coupled to a vacuum pump.

The manner in which the invention functions is such that the apparatus is mounted on the boats, but can also be used on land, and where the fish, after the net has been hauled in, can be laid up on the conveyor in random sequence and order. The machine can be fed manually or automatically. With a preferred configuration, the conveyor extends at an angle and ensures that the fish slide down into a carrier adapted for the fish, so that the fish are more or less locked in this manner. Moreover, a plate is provided above the conveyor, which for example can be a sheet of transparent acryl or a sheet of steel, where feed brushes are mounted on the underside of the plate, which hereby ensures that the fish cannot flap around too much and, for example, spring out over the conveyor.

In an area there is provided a sensor which registers the snout and the tail of the fish. For example, this can be by means of a point counter or a registration of the time it takes for the fish to pass a light beam, and possibly an ultrasound scanner to determine the thickness.

This data is then transmitted to a computer, where the length and possibly the thickness of the fish are calculated, and where the distance from the tip of the snout to where the intestines are situated is calculated, in that it has proved that the distance between the tip of the snout and the position of the intestines is directly proportional to the length of the fish. The fish are then fed to the actual suction aggregate, in that the suction aggregate and the fish are now adjusted as a function of that size which has now been calculated, and which indicates where the intestines are situated. The suction aggregate, to which vacuum is applied, is driven up/down in a vertical movement, and a knife which is disposed along the centre line of the aggregate is brought down with a quick snap movement towards the fish which lies still/fixed, in that the suction aggregate is preferably configured as a cylindrical pipe in which the knife is mounted, the cutting edge of said knife extending transversely to the direction of movement of the conveyor. The time at which a vacuum is required is controlled by a vacuum valve. It is only when the suction aggregate and the knife move towards the fish that a vacuum is applied (which sucks out the intestines), after which the vacuum valve is opened and the vacuum is removed from the suction aggregate. The cutting edge of the knife is paper-thin and as sharp as a razor blade, and at the moment that a cut is made in the area where the intestines are situated, at the same time that the suction is applied, the intestines are immediately sucked out. The sealing elements in the periphery of the cylinder/the suction stub ensure that the necessary under-pressure is provided. The suction stub itself can be adjusted to the thickness of the fish, in that it can move upwards/downwards in the vertical direction into the cylinder.

Hereafter, the fish is transported further and arrives at a sorting unit where, by the use of second means, for example in the form of ultrasound or the like, a measurement of the thickness of the fish is carried out for the generation of a second set of data, which second data is combined with the first data in a computer arranged for the purpose, and which carries out a full calculation of the total size of the fish, and also determines which category the fish belongs to. The second means can, however, be placed together with the first means, so that the length and the thickness are determined at the same time. The fish will then be transported to the sorting box/sorting class to which it belongs, and where work is preferably carried out with several sorting boxes/classes.

By providing a method according to the invention, and as disclosed further in claim 2, it is achieved that the fish are brought into a well-defined position in relation to the suction aggregate, and that the fish remain lying in the carriers, which are preferably specially constructed with V-shaped edges/pieces with the apex pointing in the transport direction.

By providing a method according to the invention, and as disclosed further in claim 3, an unequivocal measurement of the length of the fish is obtained.

By providing a method according to the invention, and as disclosed further in claim 4, it is achieved that the process becomes a fully automatic process, so that all that is required after the fish have been landed is merely to freight the boxes containing the sorted fish to the auction.

By providing a method according to the invention, and as further disclosed in claim 5, an unequivocal determination of the category to which the fish belongs is achieved.

By providing a method according to the invention, and as further disclosed in claim 6, an unequivocal determination of the thickness of the fish is achieved, and herewith for a determination of the weight of the fish.

As mentioned earlier, the invention also concerns an apparatus, such as disclosed in claim 7, and where the above-mentioned advantages are achieved.

The apparatus is particularly suitable in connection with the method disclosed in claims 1-7.

The apparatus can expediently be configured as disclosed in claim 8, whereby a positioning of the fish is achieved.

The apparatus can expediently be configured as disclosed in claim 9, whereby it is achieved that the same cutting edge can be used regardless of the size/thickness of the fish, in that a cut extending at an angle will mean, all other things being equal, that a thick fish will receive a larger opening, in that the vertical movement of the aggregate will be the same.

By providing an apparatus as further disclosed in claim 10, it is achieved that a well-regulated vacuum is established in the centre of the vertically-movable unit. so that the intestines are sucked out.

By providing an apparatus as further disclosed in claim 11, an unequivocal determination of the category to which the fish belongs is achieved.

The invention also concerns the use of both the method and the apparatus, especially for flat fish, in that the system has proved especially suitable for the handling of precisely this kind of fish due to the position of the intestines, but it can also be used for fish of other kinds.

Finally, the invention concerns a use as specified in claim 13.

The invention will now be explained in more detail with reference to the drawing, where
- fig. 1: shows the whole of the apparatus in perspective, comprising a conveyor, suction aggregate, sorting unit and boxes for collection of the fish,
- fig. 2: shows the apparatus in fig. 1 seen from the side and as a principle drawing,
- fig. 3: shows the apparatus in fig. 1 seen from above and as principle drawing, and where in particular the principles of the sorting unit are indicated,
- fig. 4: shows a detail view of the suction aggregate seen in cross-section, and its relationship with the conveyor, similarly shown in cross-section.

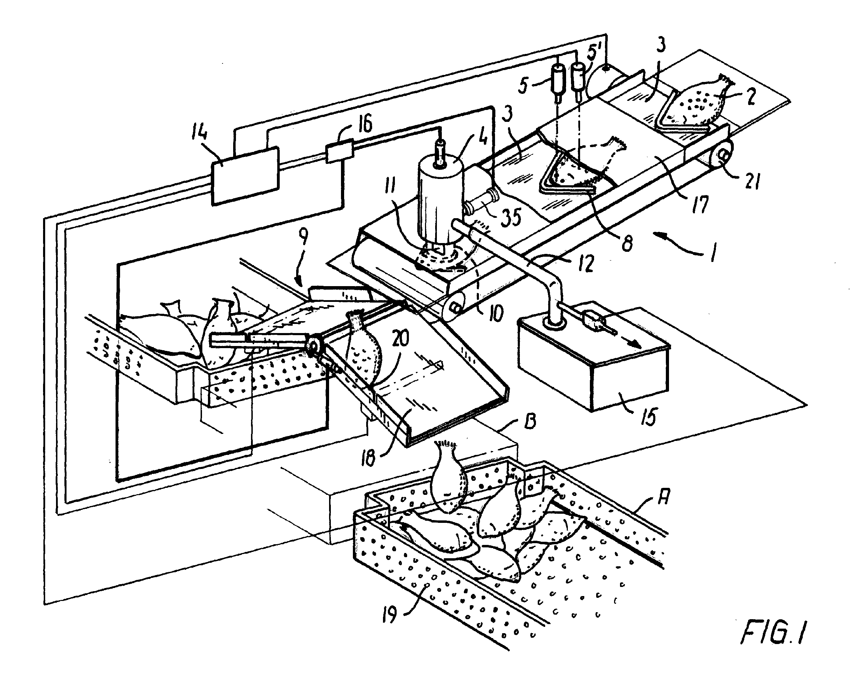

Fig. 1 shows an apparatus 1 according to the invention, comprising a conveyor 3 which extends in an inclined manner so that the lowest part is disposed nearest to the suction aggregate 4. The fish 2, preferably flat fish, are placed on the conveyor 3 with their snout end in contact with carriers 8 arranged for this purpose on the conveyor, said carriers being configured with a V-shaped edge, the apex of which faces in the transport direction of the conveyor. By these carriers and the inclination of the conveyor, which can lie at around 30°, it is ensured that the fish lie in a well-defined position. Furthermore, over the conveyor 3 there is provided a plate 17, on the underside of which there are mounted feed brushes which ensure that the fish with a flick of the tail can not spring over the carriers and out over the conveyor.

The fish are now fed via the conveyor to the suction aggregate 4, which comprises a mainly cylindrical and vertically-movable unit 10, in the centre of which a knife 11 is arranged, the cutting edge of said knife standing at right angles to the transport direction. The inlet opening of the cylinder thus contains the knife, and the cylinder outlet opening is coupled to a vacuum pump. By a quick snap movement down towards the fish, an opening is made by means of the knife, and in that the suction aggregate is at the same time coupled to the vacuum pump 12, a sucking-out of the intestines is effected. The intestines are expediently collected in a container 15 which at intervals can be emptied out into the sea, or which e.g. can form the basis for animal feeds. The vacuum pump is controlled from a computer 14 by means of an electrically-controlled vacuum valve.

The fish are now transported from the conveyor over to a sorting unit 9 which comprises at least two chutes/ramps 18, where, before the arrival of the fish at the actual suction aggregate 4, a measurement of the length of the fish is carried out by the use of first means 5 which preferably comprise a light detector or pulse meter, and with which, for example, a measurement can be made on the basis of signals which register the time that elapses between the passing of the snout of the fish and the tail of the fish. This information is fed to and stored in a computer 14, in which on the basis of the speed a calculation of the length of the fish is made. This calculation is sent further to a control unit 16 which hereby ensures that the fish and the aggregate 4 are placed correctly in relation to each other, in that it has proved that there is a direct proportionality between the length of a fish and the distance from the tip of the snout to where the intestines are situated. It is hereby ensured that the knife in the suction aggregate 4 is positioned correctly in relation to the intestines.

The system/apparatus 1 also comprises second means 5' with which a registration of the thickness of the fish is carried out. This can be carried out at any time and can, for example, be an integrated part of the first means 5 shown in the drawing. These second means can, for example, be in the form of an ultrasound scanning, whereby second data are generated and transmitted to the computer 14, where a total calculation of the size and weight of the fish is carried out, which size and weight will place the relevant fish in a category, where work is preferably effected with a total of four categories with several kinds of fish. This calculation is sent to the control unit 16, which is also coupled to a sorting arm/sweeper 20 which lies at the chute/ramp 18 itself down which the fish slides. There is hereby effected a sorting which determines whether the fish shall be placed to the right or left to slide down the right or the left chute, and also whether the fish, when for example it has been swept to the left-hand chute, shall go to the box A or the box B, in that the sweeper arm 20 is controlled in such a manner that this can effect a 90° turn, and such that when it lies parallel with the fish, the fish will slide down the chute and down into that box which stands at the foot of the chute, and when the sweeper arm 20 has turned 90° outwards, the fish will instead slide out over the side of the chute and down into another box.

In this way, a sorting of the fish can be carried out on the boat at the same time as the fish are processed.

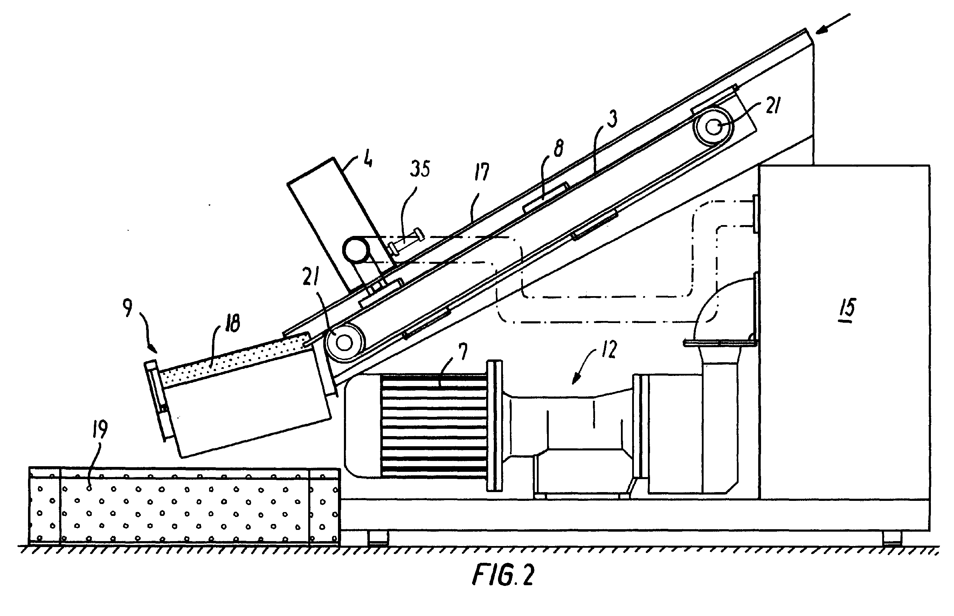

Fig. 2 shows the relationships of the conveyor and the sorting unit with, for example, the fish box, and where this shows a conveyor 3 with a plate 17 arranged at a certain distance from the upper surface of the conveyor, in that the plate 17 ensures that the fish have a small space between plate and conveyor in which the fish are held in a given position in co-operation with the carriers 8 discussed earlier. The conveyor has an inclination in the order of 20-50°, preferably around 30-35°.

After the fish have passed the sorting aggregate 4, they come down on the sorting unit 9 where, as described above, they are sorted according to size. The conveyor itself is constructed following known principles, and is thus wound around a pair of rollers 21 placed at each end, and which via an electric motor with frequency converter 7 is driven in such a manner that the intestines of the fish come to lie opposite the aggregate. The movement pattern of the motor 7 is thus also controlled by the control unit 16 described earlier.

A positioning cylinder 35, together with the frequency converter, ensures that the aggregate comes to lie opposite the intestines of the fish.

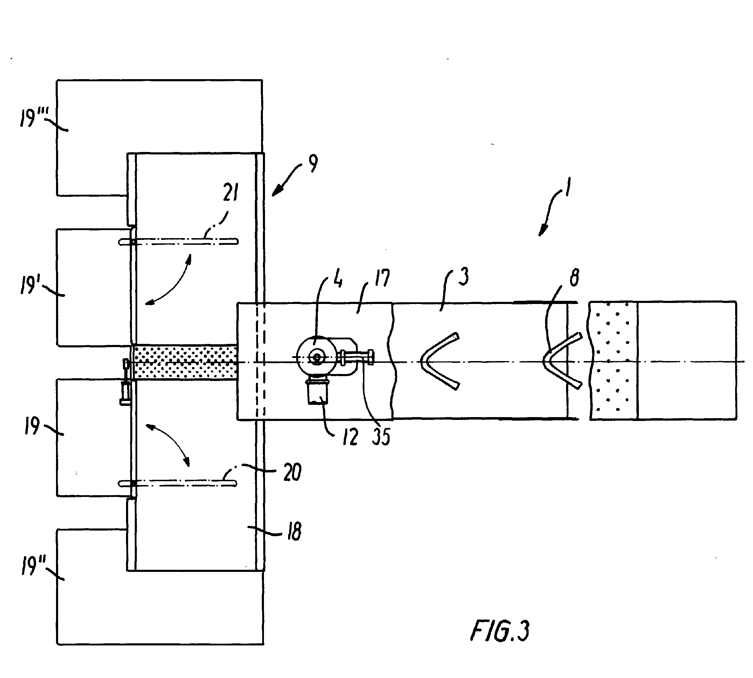

Fig. 3 shows the apparatus 1 seen from above, comprising the inclined conveyor 3 with the V-shape of the carriers clearly indicated, and where special attention is drawn to the actual sorting unit 9, where the fish are distributed either to the right or left via the above-mentioned chutes/ramps 18, and where as described earlier there are sorting arms/sweepers 20 having a movement interval of 90° on each frame, so that when the sorting arm stands transversely to the chute, the fish will slide out over the edge and down into the box 19,19', and when the sorting arm lies parallel with the edges of the chute, the fish will slide unhindered further down the chute to the box 19",19"', so that four sorting units are provided.

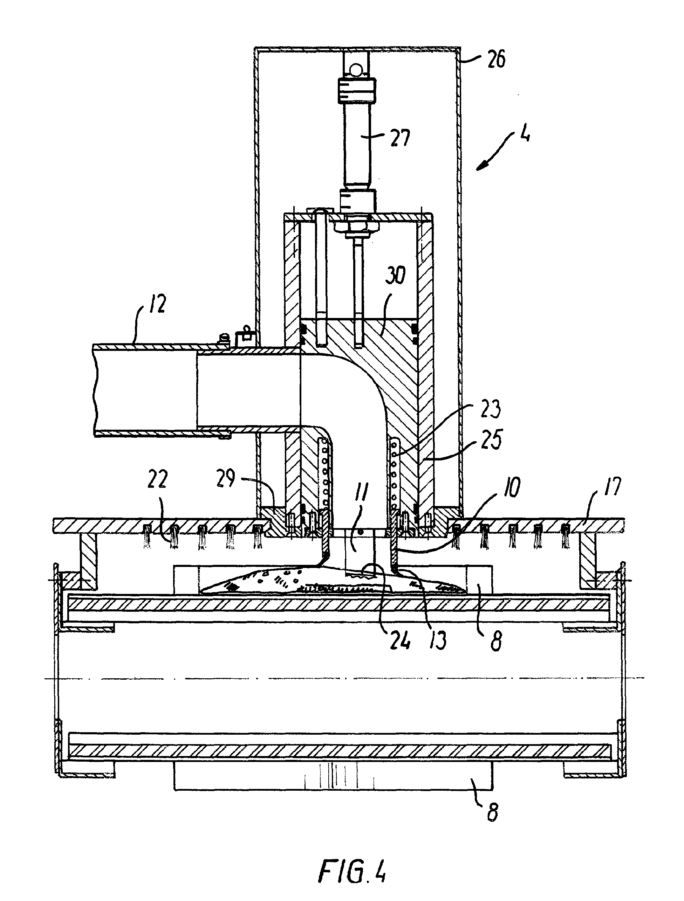

Fig. 4 shows the suction aggregate seen in detail, which comprises the suction aggregate 4 itself containing a knife 11 with a razor-sharp cutting edge 24, which cutting-edge 24 extends in an inclined manner, and where the knife with its breadth surface is at right-angles to the direction of movement of the conveyor, and since the knife moves the same way regardless of which kind of fish may arrive, the inclination will result in a larger cut when it is a decidedly curved fish, i.e. a thick fish, which is cut, than that made in a flatter fish.

The knife 11 is arranged so that its axis is parallel with the axis of a surrounding cylinder 10, said cylinder 10 being movable vertically by means of a spring arrangement 23 which is in abutment against the upper edge of the cylinder and presses this down towards the fish, and where the lower cylindrical edge on the vertical unit comprises sealing elements 13 around the whole of its periphery. The cylindrical unit 10 will typically have an inclined extent corresponding more or less to the same degree of inclination as the cutting edge of the knife. The knife 11 itself and the cylindrical unit 10 are placed in an inner cylinder housing 30 which can be moved vertically up/down - when down the vacuum is established, and when up the vacuum is removed, and which inner cylinder housing 30 is fastened via the fastening means 27 to an outer cylinder housing 25 which is fastened to a slide block 29, which in turn is fastened to an outer protection jacket/cylinder shell 26. The slide block 29 slides on the plate 17 over the conveyor 3, and/or is fastened to the frames of the conveyor itself. In this way there is thus only one movable unit, namely the vertical unit and the knife itself. The knife and the vertical unit are coupled to a vacuum aggregate 12, so that the intestines are sucked out via this aggregate. On the underside of the plate, it can be expedient to arrange brushes 22 which ensure that the fish 2 are given less free space than the free space which may exist between the plate 17 and the conveyor 3, and to control the fish in that a fish lies still when a hand is held over it.

As described earlier, on the remaining surfaces the fish 2 is restricted by the carrier 8, while at the last surface, where it could otherwise slip out, this is not a physical possibility due to the inclination of the conveyor 3.

The apparatus according to the method outlined above finds particular application in connection with flat fish due to the position of the intestines of flat fish. However, with an adjustment of the system to other fish, it will also find application in connection with other fish.

## Claims

1. Method for opening fish (2) and removing the intestines from the fish, where via a conveyor (3) said fish are transported individually to an aggregate (4) where the opening of the fish (2) and the removal of the intestines from the fish is carried out, and
where the length of the fish is determined by the use of first means (5) for the generation of first data, and
where the mutual position of the aggregate (4) and the fish (2) is adjusted as a function of the determined length of the fish,
**characterised in that**
the conveyor (3) is moved stepwise in a discontinuous movement,
the opening of the fish (2) and the removal of the intestines takes place in the period between two successive steps, the intestine removal being effected by a suction in the opening made in the fish and in the same step as that in which the opening is established.

2. Method according to claim 1, **characterised in that** the conveyor (3) extends at an angle so that the fish placed on the conveyor slide in the direction towards the aggregate (4), and down with contact in the carriers (8) provided on the conveyor before the fish is placed under the aggregate.

3. Method according to claim 1 or 2, **characterised in that** the first means (5) comprise a sensor which sends a signal upon passage of the snout of the fish and the end of the fish, and at a given speed of the conveyor.

4. Method according to any of the foregoing claims, **characterised in that** after the removal of the intestines, the fish (2) are fed forward to a sorting unit (9) where the fish are sorted into categories according to size and in at least two categories.

5. Method according to claim 4, **characterised in that** the thickness of the fish (2) is determined by second means (5') for the generation of second data, which second data in combination with the first data associated with the fish is processed in a computer for the determination of the category to which the fish belongs.

6. Method according to claim 5, **characterised in that** the second means (5') comprise a signal which, for example, is sent from an ultrasound scanner or a sensor, and which signal is processed in the computer.

7. Apparatus (1) for opening fish (2) and removal of the intestines from the fish, comprising a conveyor (3) and an aggregate (4) for opening the fish (2) and removing the intestines from the fish, said conveyor (3) transporting the fish (2) to and under the aggregate (4), said apparatus (1) comprising first means (5) for registering the length of the fish, **characterised in that** the aggregate (4) comprises a vertical, movable unit (10) with an inlet opening and an outlet opening through which the intestines from the fish are discharged, and where a knife (11) is placed in association with the inlet opening, the outlet opening of said vertical unit being coupled to a vacuum pump (12).

8. Apparatus according to claim 7, **characterised in that** the surfaces of the conveyor (3) form an angle of 25-35° to the horizontal plane, and comprise carriers for the fastening/retention of the fish.

9. Apparatus according to claims 7-8, **characterised in that** the cutting edge (13) of the knife is placed transversely to the direction of movement of the conveyor (3), and with said cutting edge of the knife (11) extending in an inclined manner.

10. Apparatus according to claim 7, 8 or 9, **characterised in that** the vertical, movable unit (10), which is fastened to a vertically movable part (30), comprises sealing elements (13) along the periphery of the inlet opening and in a direction down towards the conveyor (3).

11. Apparatus according to claim 7, 8, 9 or 10, **characterised in that** this further comprises a sorting unit (9), which unit comprises second means (6) for registration of the thickness of the fish.

12. Use of the method according to claims 1-6 and of the apparatus according to claims 7-11 for flat fish.

13. Use of the apparatus according to claims 7-11 for the execution of the method according to claims 1-6.
